## Europäisches Patentamt

## European Patent Office

## Office européen des brevets

(11) Veröffentlichungsnummer: **0 348 749**
**A2**

## EUROPÄISCHE PATENTANMELDUNG

(21) Anmeldenummer: 89110914.2

(22) Anmeldetag: 16.06.89

(51) Int. Cl.⁴: **B32B 27/32**

(30) Priorität: 25.06.88 DE 3821581

(43) Veröffentlichungstag der Anmeldung:
03.01.90 Patentblatt 90/01

(84) Benannte Vertragsstaaten:
**BE DE ES FR GB IT NL**

(71) Anmelder: HOECHST AKTIENGESELLSCHAFT
Postfach 80 03 20
D-6230 Frankfurt am Main 80(DE)

(72) Erfinder: Schlögl, Gunter, Dr.
Finkenweg 2
D-6233 Kelkheim(DE)
Erfinder: Bothe, Lothar, Dr.
Am Heiligenhaus 9
D-6500 Mainz-Gonsenheim(DE)
Erfinder: Crass, Günther
Bachstrasse 7
D-6204 Taunusstein 4(DE)
Erfinder: Murschall, Ursula, Dr.
Mozartstrasse 40
D-6505 Nierstein(DE)
Erfinder: Peiffer, Herbert, Dr.
Katzenberg 78
D-6500 Mainz-Finthen(DE)

(54) Transparente Schrumpffolie auf Basis von Polypropylen, Verfahren zu ihrer Herstellung und ihre Verwendung für Schrumpfetiketten.

(57) Es wird eine neuartige Schrumpffolie beschrieben, die aus wenigstens einer polyolefinischen Schicht besteht enthaltend Polypropylen und einen Harzzusatz. Die Folie besitzt ein Schrumpfvermögen in Querrichtung von mehr als 20 % bei 90 °C und in Längsrichtung von weniger als 8 % ebenfalls bei 90 °C.

Die neuartige Folie wird durch Extrusion und anschliessendes Streckorientieren in Längs- und Querrichtung hergestellt, wobei allerdings die Längsstreckung so durchgeführt wird, daß der Wert der Doppelbrechung der längsgestreckten Folie, $\Delta n$, den Bereich 10 bis 13 $\cdot$ $10^{-3}$ nicht übersteigt.

EP 0 348 749 A2

**Transparente Schrumpffolie auf Basis von Polypropylen, Verfahren zu ihrer Herstellung und ihre Verwendung für Schrumpfetiketten**

Die vorliegende Erfindung betrifft eine transparente schrumpffähige Folie umfassend eine Basisschicht enthaltend eine Mischung aus Polypropylen und Kohlenwasserstoffharz. Die Erfindung betrifft ferner ein Verfahren zur Herstellung einer solchen Folie und deren Verwendung als Schrumpfetiketten.

Aus "Verpackungsrundschau" 10/1983, 1121-1122, ist bereits bekannt, zylinderförmige oder annähernd zylinderförmige Verpackungseinheiten wie Flaschen oder Dosen vollumfänglich mit Rundumetiketten zu umschließen; diese Rundumetiketten werden in der angelsächsischen Literatur als sogenannte 'sleeves' bezeichnet. Die Folien für diesen Anwendungszweck sind z. B. aus Polyethylen, Polybutylen, Polystyrol, Polyethylen-Polypropylen-Copolymeren, Ethylen-Vinylacetat-Copolymeren, verschiedenen Blends, insbesondere aber aus Polyvinylchlorid. Zum Erreichen der für den gewünschten Anwendungszweck geeigneten Schrumpfeigenschaften der Folien in der Umfangsrichtung der Rundumetiketten werden die Folien im allgemeinen biaxial streckorientiert, was z. B. nach dem Bubble-, Stenter-oder Kalanderverfahren bewerkstelltigt werden kann, wobei insbesondere die Orientierung in Querrichtung bevorzugt wird. Um ein wirklich faltenfreies Anliegen der Rundumetiketten an der Verpackungseinheit zu gewährleisten, werden als Schrumpfwerte z. B. Querschrumpf ($s_q$) von ungefähr 20 bis 40 % und Längsschrumpf ($s_l$) von maximal 6 bis 8 % bei einer Temperatur von 90 °C und einer Behandlungsdauer von 15 min im Umluftofen gefordert.

Die Schrumpffolien werden außerdem z. B. im Konterdruckverfahren bedruckt und anschließend zu einem Schlauch geklebt oder geschweißt. Durch den kontrollierten Querschrumpf legt sich der Schlauch im Schrumpfofen fest und faltenfrei um die Verpackungseinheit. Das Aufbringen des Etiketts erfolgt maschinell mit Hilfe von Bürsten oder wahlweise auch manuell. Außer dem gewünschten Schrumpf müssen die Rundumetiketten folgende Eigenschaften besitzen: hoher Glanz, glasklar, gute Gleitfähigkeit und Steifigkeit ( = Produkt aus E-Modul und Dicke³) für die maschinelle Aufbringung des Etiketts, gute Bedruckbarkeit und gute Verschweiß-/Verklebbarkeit.

Das gesamte bisher beschriebene Anforderungsprofil wird nach dem Stand der Technik gemäß US-PS 4,352,849 am besten von PVC-Folie erreicht. Insbesondere wird durch das hohe Schrumpfvermögen und die guten optischen und mechanischen Eigenschaften nahezu der gesamte Anwendungsbereich abgedeckt. Die Gestalts- oder Durchmesseränderung der Verpackungseinheit, insbesondere der Dose oder Flasche, kann dabei im Bereich des Etiketts mehr als 30 % ausmachen.

Als Nachteil der Rundumetiketten aus PVC ist insbesondere der hohe Preis, der hauptsächlich aus der hohen Dichte von 1,39 kg/dm³ resultiert, die ca. 50 % höher ist als diejenige von z. B. PP, zu nennen, ferner bestehen Pro bleme hinsichtlich Korrosion der Herstellungs- und Verarbeitungsaggregate (vgl. EP-A-0 233 400).

Schrumpfetikettenfolien auf polyolefinischer Basis bestehen vor allem aus Blends auf Basis von Homo-, Co- und Terpolymeren. Zur Erzielung der geforderten Schrumpfeigenschaften werden die Folien im Bubble-oder im Stenter-Prozeß biaxial gestreckt.

Schrumpfetiketten auf Basis von Polyolefin-Folien haben nach dem Stand der Technik Eigenschaften, die bei der Verarbeitung in der Praxis von Nachteil sein können:

1. Die mechanischen Eigenschaften sind meistens sehr gering und/oder

2. das Verfahren zur Erzielung eines hohen Querschrumpfs und eines niedrigen Längsschrumpfs ist sehr aufwendig.

Geringe mechanische Eigenschaften sind insbesondere bei automatisch arbeitenden Schrumpfmaschinen von Nachteil. Um eine ausreichende (gleiche oder ähnlich gute) Steifigkeit wie beim PVC zu bekommen, muß man die Dicke der polyolefinischen Folie teilweise um 50 % und mehr anheben. Dies verteuert jedoch im gleichen Maße den Preis der Folie, und außerdem wird durch die größere Dicke - bei gleichem Schrumpfendwert - die Schrumpfgeschwindigkeit kleiner. Ein nach dem Stand der Technik arbeitendes Verfahren zur Erzielung eines hohen Verhältnisses zwischen Querschrumpf und Längsschrumpf von Polypropylenfolien ist z. B. in der EP-A-0 171 733 näher beschrieben, aus der auch Folien der gattungsbildenden Art aus Copolymeren des Propylens mit anderen Alpha-Olefinen und einem Harzzusatz bekannt sind. Bei diesem Verfahren wird nach dem Zweistufenprozeß eine biaxial orientierte Folie hergestellt. Zur Erzielung eines geringen Längsschrumpfs wird zwischen der Längsstreckung und der Querstreckung die Folie in einem zusätzlichen Schritt bei erhöhter Temperatur (ca. 130 °C) getempert. Die Temperzeit beträgt dabei 2 bis 180 s. Je nach Geschwindigkeit der Produktionsanlage - üblich sind heute ca. 200 bis 300 m/min - muß bei diesem Verfahren ein relativ aufwendiges und teures Aggregat zwischen der Längs- und der Querstreckung angeordnet werden, denn bei einer Temperzeit von z. B. 60 s und einer Maschinengeschwindigkeit von 200 m/min würde hierzu eine Ofenlänge von 200 m benötigt. Für die Folienproduktion nach heute üblichen Verfahren ist demnach die Methode unter verfahrenstechnischen Gesichtspunkten wenig geeignet. Außerdem weist die Folie verbesserungswürdige mechanische Eigenschaften auf.

Die Aufgabe der vorliegenden Erfindung bestand nun darin, eine transparente, gut verklebbare und gut schrumpfbare Mehrschichtfolie für Rundumetiketten auf Basis von Polypropylen zu entwickeln, die sehr gute optische und mechanische Eigenschaften hat und dadurch vor allem wirtschaftliche Vorteile gegenüber Folien nach dem Stand der Technik ermöglicht.

Gelöst wird diese Aufgabe durch eine Folie der eingangs genannten Gattung, deren kennzeichnende Merkmale darin bestehen, daß eine Basisschicht 60 bis 95 Gew.-% eines Propylenpolymeren und 5 bis 40 Gew.-% eines hydrierten Kohlenwasserstoffharzes mit einem Erweichungspunkt im Bereich von 60 bis 125 °C enthält, wobei die Prozentangaben bezogen sind auf das Gesamtgewicht der Mischung, und daß auf beiden Oberflächen der Basisschicht Deckschichten aus Polypropylen angeordnet sind enthaltend 60 bis 100 Gew.-% eines Propylenpolymeren und 0 bis 40 Gew.-% eines hydrierten Kohlenwasserstoffharzes mit einem Erweichungspunkt im Bereich von 90 bis 145 °C, wobei die Prozentangaben bezogen sind auf das Gesamtgewicht der Deckschichten.

Das Propylenpolymere der Basisschicht ist ein isotaktisches Polypropylen mit einem n-heptanlöslichen Anteil von 15 Gew.-% oder weniger, wobei isotaktische Polypropylene mit einem n-heptanlöslichen Anteil von 2 bis 6 Gew.-% besonders bevorzugt sind. Geeignete Propylenpolymere besitzen zweckmäßigerweise einen Schmelzflußindex von 0,5 g/10 min bis 8 g/10 min bei 230 °C und 2,16 kp Belastung (bestimmt nach DIN 53 735), insbesondere von 1,5 g/10 min bis 4 g/10 min.

Das Propylenpolymere der Deckschichten ist ein isotaktisches Polypropylen mit einem n-heptanlöslichen Anteil von 15 Gew.-% oder weniger, wobei isotaktische Polypropylene mit einem n-heptanlöslichen Anteil von 2 bis 6 Gew.-% besonders bevorzugt sind. Der Schmelzflußindex des Propylenpolymeren der Deckschicht soll zweckmäßigerweise höher sein als derjenige des Propylenpolymeren für die Basisschicht. Für die Deckschichten geeignete Propylenpolymere sollen daher einen Schmelzflußindex im Bereich von 5 bis 20 g/10 min aufweisen.

Bei dem erfindungsgemäß in der Basisschicht der Folie auch noch enthaltenen Kohlenwasserstoffharz handelt es sich um ein niedrigmolekulares synthetisches Harz, das einen Erweichungspunkt in dem bevorzugten Bereich von 70 bis 90 °C aufweist, bestimmt gemäß ASTM-E 28. Derartige Kohlenwasserstoffharze werden gewöhnlich aus harzbildenden Verbindungen wie Styrol, Methylstyrol, Vinyltoluol, Inden, Pentadien, Cyclopentadien u. ä. gebildet. Erfindungsgemäß werden insbesondere hydrierte Harze, insbesondere hydrierte Cyclopentadienharze, besonders bevorzugt. Die Farbzahl nach Saybold (gemäß ASTM D 158) ist größer als 20, vorzugsweise größer als 25. Das in den Deckschichten in den angegebenen Mengen enthaltene Harz kann prinzipiell das gleiche Harz sein, wie es auch in der Basisschicht enthalten ist, jedoch hat sich gezeigt, daß für die Deckschichten vorteilhaft Harze eingesetzt werden können, die einen Erweichungspunt bei höheren Temperaturen besitzen, vorzugsweise im Bereich von 110 °C bis 135 °C. Die chemische Zusammensetzung solcher Harze ist die gleiche wie die der Harze mit dem Erweichungspunkt in einem niedrigeren Temperaturbereich.

Die Deckschichten enthalten vorzugsweise noch zusätzlich ein anorganisches oder organisches Antiblockmittel. Geeignete Antiblockmittel sind anorganische Zusatzstoffe, z. B. Siliciumdioxid und Calciumcarbonat oder dergleichen. Wesentlich für das Antiblockmittel ist, daß die mittlere Teilchengröße zwischen 1,5 und 3 μm liegt und ihr Formfaktor < 3 ist. Der Brechungsindex der Antiblockmittel liegt zwischen 1,4 und 1,6. $SiO_2$ und Calciumcarbonat sind als Antiblockmittel bevorzugt. Die Zusatzmenge beträgt 0,1 bis 0,5 Gew.-%. Unter dem Formfaktor des Antiblockmittels versteht man das Verhältnis von größter Deckfläche zur Dicke der Teilchen. Entsprechend dieser Definition besitzt ein würfelförmiges Antiblockmittel z. B. einen Formfaktor von 1.

Um bestimmte Eigenschaften der erfindungsgemäßen Schrumpffolie noch weiter zu verbessern, insbesondere was Verbesserungen des Laufverhaltens der Folie bei dem Herstellungs- oder Verarbeitungsprozeß angeht, können die Schichten geeignete Wirkstoffkomponenten in jeweils wirksamen Mengen enthalten, vorzugsweise Antistatika und/oder Gleitmittel.

Bevorzugte Antistatika sind im wesentlichen geradkettige und gesättigte aliphatische, tertiäre Amine mit einem aliphatischen Rest mit 10 bis 20 Kohlenstoffatomen, die mit 2-hydroxyalkyl-($C_1$-$C_4$)-Gruppen substituiert sind, worunter N,N-bis-(2-hydroxyethyl)-alkylamine mit $C_{10}$-$C_{20}$, vorzugsweise $C_{12}$-$C_{18}$, als Alkylgruppen besonders geeignet sind. Die wirksame Menge an Antistatikum liegt im Bereich von 0,05 bis 1 Gew.-%, bezogen auf die Schicht.

Als besonders zweckmäßig hat sich die Ausrüstung der Deckschicht mit 0,1 bis 0,7 Gew.-% eines N,N-bis-ethoxyalkylamins mit einem aliphatischen Rest mit 10 bis 20 Kohlenstoffatomen erwiesen.

Beispiele für Gleitmittel sind höhere aliphatische Säureamide, höhere aliphatische Säureester, Wachse und Metallseifen sowie Polydimethylsiloxan. Die wirksame Menge an Gleitmittel liegt im Bereich von 0,1 bis 2 Gew.-%, bezogen auf das Gewicht der Schicht. Als besonders geeignet hat sich der Zusatz von höheren aliphatischen Säureamiden (z. B. Erucasäureamid) mit 0,15 bis 0,25 Gew.-% in der Basisschicht und/oder den Deckschichten erwiesen. Sehr gute Ergebnisse werden durch den Zusatz von Polydimethylsiloxan in eine oder beide Deckschichten erreicht. Die Zusatzmenge liegt zweckmäßig im Bereich von 0,5 bis 1,5 Gew.-%, wobei die Viskosität des Polydimethylsiloxans zwischen 1 000 und 100 000 mm$^2$/s liegt.

Die Dicke der erfindungsgemäßen Folie liegt im Bereich von 15 bis 50 μm, vorzugsweise von 20 bis 45 μm, wobei die Deckschichten eine Dicke von 0,5 bis 1,0 μm aufweisen.

Die im vorstehenden bezüglich ihrer chemischen Zusammensetzung beschriebene erfindungsgemäße Folie zeichnet sich insbesondere durch ganz besonders wünschenswerte Schrumpfeigenschaften aus. Sie besitzt nämlich ein Schrumpfvermögen von mehr als 20 % bei 90 °C und von mehr als 40 % bei 120 °C in Querrichtung und gleichzeitig ein Schrumpfvermögen von weniger als 8 % bei 90 °C und von weniger als 16 % bei 120 °C in Längsrichtung, wobei die Prozentangaben jeweils bezogen sind auf die jeweilige Längenausdehnung der Folie vor dem Schrumpfprozeß. Die angegebenen Schrumpfwerte sind jeweils im Umluftofen bei einer Dauer von 15 min gemäß DIN 406 34 ermittelt worden. Vorzugsweise liegt das Schrumpfvermögen der erfindungsgemäßen Folie in Querrichtung in einem Bereich von 20 bis 30 % bei 90 °C und von 40 bis 60 % bei 120 °C und in Längsrichtung in einem Bereich von maximal 4 bis 8 % bei 90 °C und von maximal 10 bis 16 % bei 120 °C, jeweils bezogen auf die Längenausdehnung der Folie vor dem Schrumpfprozeß.

Neben den bereits beschriebenen hervorragenden Schrumpfeigenschaften besitzt die erfindungsgemäße Folie zusätzlich noch in besonders hohem Maße wünschenswerte mechanische Eigenschaften. Der Elastizitätsmodul wird mit einem Zug-Dehnungsgerät der Firma Zwick in Ulm-Einsingen des Typs 1445 gemäß DIN 53 455 bestimmt. Die erfindungsgemäße Folie besitzt danach einen E-Modul in Längsrichtung von mehr als 2 000 N/mm$^2$, bevorzugt von 2 200 bis 2 600 N/mm$^2$, und einen E-Modul in Querrichtung von mehr als 4 000 N/mm$^2$, vorzugsweise von 4 500 N/mm$^2$ bis 5 500 N/mm$^2$.

Ein anderer physikalischer Parameter, der die mechanischen Eigenschaften der erfindungsgemäßen Folie verdeutlicht, ist die Reißfestigkeit, die ebenfalls nach DIN 53 455 bestimmt wird. Die Schrumpffolie gemäß der Er findung weist eine Reißfestigkeit in Längsrichtung von mehr als 130 N/mm$^2$, vorzugsweise im Bereich von 145 bis 185 N/mm$^2$, auf und in Querrichtung von mehr als 220 N/mm$^2$, vorzugsweise im Bereich von 235 bis 290 N/mm$^2$.

Insbesondere die optischen Eigenschaften der erfindungsgemäßen Folie sind sehr hervorragend. Der Glanzwert liegt im Bereich von 110 bis 130, bestimmt nach DIN 67 530 bzw. ASTM-D 523, und die Trübung der Folie beträgt weniger als 20 %, vorzugsweise 10 bis 15 %, wobei die Trübung der Folie in Anlehnung an ASTM-D 1003-52 gemessen wird. Anstelle einer 4°-Lochblende wird eine 1°-Spaltblende eingesetzt, und die Trübung in Prozent wird für vier übereinanderliegende Folienlagen angegeben. Die vier Lagen wurden gewählt, da man hierdurch den optimalen Meßbereich ausnutzt. Der besonders hohe Glanzwert der erfindungsgemäßen Folie wirkt sich insbesondere sehr werbewirksam aus, und deshalb ist das Einsatzgebiet der erfindungsgemäßen Folie vor allem dort zu sehen, wo der Etikettierprozeß (Stülpen und Schrumpfen) automatisch erfolgt und an das Produkt (Dose/Flasche/Spender) hohe optische Anforderungen gestellt werden.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Extrusion bzw. Coextrusion in einer Breitschlitzdüse zunächst eine Vorfolie hergestellt wird, die dann auf einer Kühlwalze verfestigt und daran anschliessend in Längs- und Querrichtung durch Strecken orientiert wird. Erfindungsgemäß werden die Bedingungen in der Längsstreckung so gewählt, daß die längsgestreckte Folie nur wenig orientiert ist. Die Voraussetzungen für die Erzielung eines hohen Querschrumpfes und eines niedrigen Längsschrumpfes sind dann besonders günstig. Ein gebräuchliches Maß für die Beurteilung des Ausmaßes der Orientierung der längsgestreckten Folie ist die Doppelbrechung Δ n. Die erfindungsgemäße Folie zeichnet sich dadurch aus, daß die Doppelbrechung der längsgestreckten, aber noch nicht quergestreckten Folie einen Wert von Δn = 10 bis 13 · 10$^{-3}$ nicht übersteigt. Vorzugsweise sollte die Doppelbrechung Δ n < 8 · 10$^{-3}$ betragen. Die Längsstreckung wird durchgeführt bei einer Temperatur von mehr als 140 °C, vorzugsweise im Bereich von 145 bis 165 °C, und mit einem Streckverhältnis von kleiner 4,5, vorzugsweise im Bereich von 3 bis 4.

Überraschenderweise hat sich gezeigt, daß bei diesen Bedingungen die Querstrecktemperatur $T_q$ sehr viel niedriger gewählt werden kann als dies sonst üblich ist und dennoch sehr gute Prozeßsicherheit gewährleistet ist. Erfindungsgemäß wird die Streckung in Querrichtung bei einer Temperatur von weniger als 120 °C durchgeführt, vorzugsweise von weniger als 110 °C. Das Streckverhältnis in Querrichtung beträgt erfindungsgemäß mehr als 8, vorzugsweise im Bereich von 8,5 bis 11.

Nach der Streckung der Folie in Querrichtung schließt sich eine abschließende Fixierstufe an. Dabei wird die Folie bei einer Temperatur von 20 bis 40 °C unterhalb der Strecktemperatur, insbesondere bei einer Temperatur unterhalb von 110 °C, vorzugsweise von unterhalb von 80 °C, in dem Streckrahmen, eventuell leicht konvergierend, weitergeführt. Die Konvergenz während der Fixierstufe beträgt vorzugsweise 5 bis 15 %.

Hervorgehoben werden muß, daß aufgrund des erfindungsgemäßen Herstellungsverfahrens die Ausrüstung der Deckschichten mit niedermolekularen Additiven (Carbonsäureamiden, N,N-bis-ethoxyalkylaminen) ohne größere technische Probleme möglich ist. Ausdampfprobleme und Ablagerungsprobleme in Querstreckrahmen treten nicht auf. Aufgrund der erfindungsgemäßen Verfahrensbedingungen kommt es auch nicht zu störenden Harzausdampfungen.

Die Bedruckbarkeit bzw. Verklebbarkeit der Folie wird durch eine der üblichen Oberflächenbehandlungen vor dem Aufrollen erreicht, z. B. Flammbehandlung oder elektrische Coronabehandlung.

Zur Coronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen.

Die Behandlungsintensitäten liegen im üblichen Rahmen. Behandlungsintensitäten von 38 bis 42 mN/m sind bevorzugt.

Zur Bedruckung wird die Folie vorzugsweise im Konterdruck bedruckt.

Die so hergestellte Schrumpffolie besitzt eine Kombination von Eigenschaften, die sie in besonders hohem Maß geeignet macht für ihren bestimmungsgemäßen Verwendungszweck als Folie für Rundumetiketten. Ihr bevorzugtes Einsatzgebiet ist vor allem dort zu sehen, wo die Gestaltänderung der Dose oder Flasche im Bereich der Etikettierung weniger als 25 % ausmacht.

Die im vorstehenden in allen Einzelheiten beschriebene erfindungsgemäße Folie soll nachfolgend durch ein Ausführungsbeispiel noch deutlicher erläutert werden.

Beispiel

Eine mehrschichtige Folie bestehend aus einer Basisschicht aus 90 Gew.-% isotaktischem Polypropylen und 10 Gew.-% hydriertem Cyclopentadienharz mit einer Erweichungstemperatur von 85 °C und Deckschichten aus isotaktischem Polypropylen, dem 0,3 Gew.-% eines $CaCO_3$ mit einer mittleren Teilchengröße von 2 μm und einem Formfaktor von 1, 0,5 Gew.-% N,N-bis-ethoxyalkylamin ([R]Armostat 300) und 0,7 Gew.-% Polydimethylsiloxan (Viskosität 30 000 cSt) beigegeben waren, wurde über die Verfahrensschritte Coextrusion, Abkühlen, Längsstreckung, Querstreckung, Fixierung hergestellt. Die Gesamtdicke der Folie betrug 30 μm, wobei die Deckschichten jeweils ca. 0,8 μm dick waren. Die Herstellungsbedingungen in den einzelnen Verfahrensschritten waren:

| Extrusion: | Temperatur der Schmelzen | 270 °C |
| | Temperatur der Abzugswalze | 60 °C |
| Längsstreckung: | Temperatur T = 155 °C | |
| | Längsstreckverhältnis λ = 4,0 | |
| Querstreckung: | Temperatur T = 105 °C | |
| | Querstreckverhältnis λ = 10 | |
| Fixierung: | Temperatur T = 70 °C | |
| | Zeitdauer t = 1 s | |

Die auf diese Weise hergestellte Folie besaß die in der Tabelle aufgelisteten Eigenschaften (letzte Zeile). Die Folie wurde vor der Aufrollung einer Coronabehandlung unterzogen, um eine Bedruckbarkeit/Verklebbarkeit zu gewährleisten. Die Behandlungsintensität betrug 39 mN/m.

In der Tabelle wurden der erfindungsgemäßen Folie eine PVC-Folie, eine Folie gemäß der EP-A-0 171 733 sowie eine unter ähnlichen wie den erfindungsgemäßen Bedingungen hergestellte Polypropylenfolie ohne Harzzusatz gegenübergestellt. Ein Vergleich der ausgewiesenen Eigenschaften zeigt, daß sich die erfindungsgemäße Folie insbesondere im Hinblick auf die aufgabengemäß angestrebte Eigenschaftskombination allen bekannten Folien als überlegen erweist.

| Eigenschaften / Folie | Schrumpf [%] 15 min in Luft quer / längs 90 °C | 120 °C | E-Modul $[\frac{N}{mm^2}]$ längs | quer | Reißfestigkeit $[\frac{N}{mm^2}]$ längs | quer | Trübung [%] | Glanz | Dichte [kg/m³] | Dicke gleicher Steifigkeit [µm] |
|---|---|---|---|---|---|---|---|---|---|---|
| PVC | 50/6 | 52/6 | 2700 | 3700 | 60 | 110 | 5 | 120 | 1390 | ~ 30 |
| EPA 0 171 733 | 100°C, 5 min 38/10 | | ~ 1500 | ~ 1500 | 145 | 120 | > 20 | < 100 | ~ 900 | ~ 40 |
| Polypropylen | 10/6 | 20/9 | 2200 | 4500 | 170 | 300 | 30 | 105 | 900 | ~ 31 |
| Erfindungsgemäße Folie | 25/5 | 45/8 | 2300 | 4700 | 160 | 270 | 15 | 120 | 900 | 30 |

Tabelle I: Beispiele

EP 0 348 749 A2

**Ansprüche**

1. Transparente schrumpffähige Folie umfassend eine Basisschicht enthaltend eine Mischung aus Polypropylen und Kohlenwasserstoffharz, dadurch gekennzeichnet, daß die Basisschicht 60 bis 95 Gew.-% eines Propylenpolymeren und 5 bis 40 Gew.-% eines hydrierten Kohlenwasserstoffharzes mit einem Erweichungspunkt im Bereich von 60 bis 125 °C enthält, wobei die Prozentangaben bezogen sind auf das Gesamtgewicht der Mischung, und daß auf beiden Oberflächen der Basisschicht Deckschichten aus Polypropylen angeordnet sind enthaltend 60 bis 100 Gew.-% eines Propylenpolymeren und 0 bis 40 Gew.-% eines hydrierten Kohlenwasserstoffharzes mit einem Erweichungspunkt im Bereich von 90 bis 145 °C, wobei die Prozentangaben bezogen sind auf das Gesamtgewicht der Deckschichten.

2. Folie nach Anspruch 1, dadurch gekennzeichnet, daß das Propylenpolymere der Basisschicht ein isotaktisches Polypropylen mit einem n-heptanlöslichen Anteil von 10 Gew.-% oder weniger ist, das einen Schmelzflußindex von 0,5 g/10 min bis 8 g/10 min bei 230 °C und 2,16 kp Belastung aufweist.

3. Folie nach Anspruch 1, dadurch gekennzeichnet, daß das Propylenpolymere der Deckschichten ein isotaktisches Polypropylen mit einem n-heptanlöslichen Anteil von 10 Gew.-% oder weniger ist, das einen Schmelzflußindex im Bereich von 5 bis 20 g/10 min aufweist.

4. Folie nach einem der Ansprüche 1 bis 3, dadurch gekennzeichnet, daß das hydrierte Kohlenwasserstoffharz ein niedrigmolekulares synthetisches Harz ist, das einen Erweichungspunkt in dem bevorzugten Bereich von 70 bis 90 °C aufweist, insbesondere hydriertes Cyclopentadienharz.

5. Folie nach einem der Ansprüche 1 bis 4, dadurch gekennzeichnet, daß die Deckschichten zusätzlich ein anorganisches oder organisches Antiblockmittel enthalten, vorzugsweise Siliciumdioxid oder Calciumcarbonat mit einer mittleren Teilchengröße zwischen 1,5 und 3 µm, einem Formfaktor im Bereich von 1 bis 4,5 und in einer Menge von 0,1 bis 0,5 Gew.-%.

6. Folie nach einem der Ansprüche 1 bis 5, dadurch gekennzeichnet, daß sie eine Dicke im Bereich von 15 bis 50 µm, vorzugsweise von 20 bis 45 µm, besitzt, wobei die Deckschichten eine Dicke von 0,5 bis 1,0 µm aufweisen.

7. Folie nach einem der Ansprüche 1 bis 6, dadurch gekennzeichnet, daß die Folie ein Schrumpfvermögen von mehr als 20 % bei 90 °C und von mehr als 40 % bei 120 °C in Querrichtung und gleichzeitig ein Schrumpfvermögen von weniger als 8 % bei 90 °C und von weniger als 16 % bei 120 °C in Längsrichtung besitzt, wobei die Prozentangaben jeweils bezogen sind auf die jeweilige Längenausdehnung der Folie vor dem Schrumpfprozeß.

8. Folie nach Anspruch 7, dadurch gekennzeichnet, daß sie ein Schrumpfvermögen in Querrichtung in einem Bereich von 20 bis 30 % bei 90 °C und von 40 bis 60 % bei 120 °C und in Längsrichtung in einem Bereich von maximal 4 bis 8 % bei 90 °C und von maximal 10 bis 16 % bei 120 °C besitzt, jeweils bezogen auf die Längenausdehnung der Folie vor dem Schrumpfprozeß.

9. Folie nach einem der Ansprüche 1 bis 8, dadurch gekennzeichnet, daß sie einen E-Modul in Längsrichtung von mehr als 2 000 N/mm², bevorzugt von 2 200 bis 2 600 N/mm², und einen E-Modul in Querrichtung von mehr als 4 000 N/mm², vorzugsweise von 4 500 N/mm² bis 5 500 N/mm², besitzt.

10. Folie nach einem der Ansprüche 1 bis 9, dadurch gekennzeichnet, daß sie eine Reißfestigkeit in Längsrichtung von mehr als 130 N/mm², vorzugsweise im Bereich von 145 bis 185 N/mm², aufweist und in Querrichtung von mehr als 220 N/mm², vorzugsweise im Bereich von 235 bis 290 N/mm².

11. Verfahren zur Herstellung einer Folie gemäß einem der Ansprüche 1 bis 10, bei dem mittels Coextrusion in einer Breitschlitzdüse zunächst eine Vorfolie hergestellt wird, die dann auf einer Kühlwalze verfestigt und daran anschliessend in Längs- und Querrichtung durch Strecken orientiert wird, dadurch gekennzeichnet, daß die Bedingungen in der Längsstreckung so eingestellt werden, daß die zunächst längsgestreckte Folie nur wenig orientiert ist.

12. Verfahren nach Anspruch 11, dadurch gekennzeichnet, daß die Doppelbrechung der längsgestreckten, aber noch nicht quergestreckten Folie einen Wert von $\Delta n = 10$ bis $13 \cdot 10^{-3}$ nicht übersteigt.

13. Verfahren nach Anspruch 11 oder 12, dadurch gekennzeichnet, daß die Längsstreckung bei einer Temperatur von mehr als 140 °C, vorzugsweise im Bereich von 145 bis 155 °C, mit einem Streckverhältnis von kleiner 4,5, vorzugsweise im Bereich von 3 bis 4, durchgeführt wird und daß die Streckung in Querrichtung bei einer Temperatur von weniger als 120 °C, vorzugsweise von weniger als 110 °C, mit einem Streckverhältnis in Querrichtung von mehr als 8, vorzugsweise im Bereich von 8,5 bis 11, durchgeführt wird.

14. Verfahren nach einem der Ansprüche 11 bis 13, dadurch gekennzeichnet, daß nach der Streckung der Folie in Querrichtung eine abschließende Fixierstufe angeschlossen ist, in der die Folie bei einer Temperatur von 20 bis 40 °C unterhalb der Strecktemperatur, insbesondere bei einer Temperatur unterhalb von 110 °C, vorzugsweise von unterhalb von 80 °C, in dem Streckrahmen, eventuell leicht konvergierend, weitergeführt wird.

15. Verfahren nach Anspruch 14, dadurch gekennzeichnet, daß die Konvergenz während der Fixierstufe vorzugsweise 5 bis 15 % beträgt.